# EUROPEAN PATENT APPLICATION

(11) **EP 0 585 928 A1**
(43) Date of publication of application: **09.03.1994**
(21) Application number: 93114085.9
(22) Date of filing: 02.09.1993
(51) Int. Cl.: A01K 1/015

(54) **Treating materials for excretions of pet animals**

(30) Priority: 03.09.1992 JP 263042/92
(71) Applicant: SANYO CHEMICAL INDUSTRIES, Ltd., Kyoto-shi Kyoto-fu, 605 (JP)
(72) Inventor: Fujiura, Yoji, Kyoto-shi, Kyoto-fu, 607 (JP); Sakakibara, Megumu, Sanyo Kasei Higashiyama-ryo, Kyoto-shi, Kyoto-fu, 605 (JP); Koike, Masami, Takatsuki-shi, Osaka-fu, 569 (JP)
(74) Representative: VOSSIUS & PARTNER

(57) **Abstract**

The present invention relates to a treating material for excretions of pet animals formed by dry-compression molding of a mixture of organic fibrous substance, water absorbent resin powder and, optionally, a binder.

The treating material of the present invention is capable of absorbing a given amount of urine in a short time and with less consumption of the treating material, thus being economical.

## Description

The present invention relates to treating material for excretions of pet animals. More particularly, the invention concerns a material which treats excretions of pet animals such as cats and dogs conveniently and efficiently.

As a well-known treating material for pet excretions, JP-A-108927/1989 discloses materials which are obtained by pelletizing a mixture of particular proportions of inorganic particles such as zeolite particles, etc., a water-absorbent resin and water under wet conditions, followed by drying the pellets. In addition,

JP-A-25629/1984 discloses materials which are obtained by pelletizing a mixture of paper production residue, water-absorbent resin and water-soluble inorganic salt under wet conditions, followed by drying the pellets.

Such treating materials formed by pelletizing and drying a mixture of inorganic powder, paper production residue, water absorbent resin and water are appropriate for granulation, but have a low urine absorption rate. This is due to a water absorbed gel of the water absorbent resin acting as a binder to bond the grains of the inorganic powder and the paper production residue tightly to one another in the drying process. Since the rate of absorption is low, an additional amount of the treating material is needed to absorb a quantity of urine which may be excreted in a short time. Accordingly, the consumption of the treating material will be increased significantly, thus incurring greater cost.

The inventors have focused on an improved treating material for excretions of pet animals to solve the foregoing disadvantages and have developed the present invention which allows a lesser amount of the treating material to absorb a given amount of waste or urine in a short period of time.

An object of the present invention is to provide an improved treating material for excretions of pet animals which is capable of absorbing a given amount of urine with less consumption of the treating material in a short period of time.

It is a further object of the invention to provide treating material which may easily adhere to each other to quickly form agglomerated lumps when urine is absorbed, so that the part which has absorbed excretion can be easily removed for disposal.

For this purpose, the present invention relates to treating material for excretions of pet animals which is formed by dry-compression molding a mixture comprising an organic fibrous substance, a water absorbent resin powder, and optionally a binder.

Examples of the organic fibrous substance (A) are natural fibers (e.g. cellulose type including cotton, saw dust and straw; grass peat, or wool), artificial fibers (e.g. cellulose type such as rayon or acetate rayon), synthetic fibers(e.g. polyamide fiber, polyester fiber or acrylic fiber), pulp (e.g. mechanical pulp including direct ground pulp and Asplund processed ground pulp or chemical pulp including sulfite pulp, soda pulp, sulfate pulp, nitrate pulp and chlorine pulp), semichemical pulp, regenerated pulp (e.g. mechanically crushed pieces of screened paper or recycled paper), other waste material (e.g. scraps from paper diaper production), and a combination of two or more of these. Most preferred is the pulp or waste from paper diaper production.

Preferably, the organic fibrous substance (A) is provided in the form of powder or fibers (e.g. cut single fiber, cut multifilament yarn, and cut non-woven fabric). The length of each fiber segment is not limited but commonly 0.1 to 50 mm or preferably within a range of 0.1 to 20 mm.

According to the invention, the water absorbent resin (B) may be composed of ① resins obtainable by polymerizing (a) starch or cellulose, (b) a water-soluble monomer having a carboxyl group, a carboxylic anhydride group, a carboxylate group, a sulfonic acid group, a sulfonic acid ester or a sulfonate group and/or a monomer capable of becoming water-soluble through hydrolysis, and (c) a crosslinking agent and subsequently carrying out, if necessary, hydrolysis.

Details of the components (a), (b) and (c) used for producing the water absorbent resins noted above and the proportions of the components (a), (b) and (c), their method of production and specific examples of the resins, are described in Japanese Patent Application Laid-Open No. 25886/1977 and Japanese Patent Publication Nos. 46199/1978, No. 46200/1978 and No. 21041/1980.

Examples of (a) include raw starches such as sweet potato starch, potato starch, wheat starch, corn starch, rice starch, and tapioca starch; processed starch such as oxidized starch, dialdehyde starch, alkylated starch, oxy alkylated starch, amino-ethylated starch, and cyanoethylated starch; and celluloses such as natural cellulose, carboxymethylcellulose, and cellulose ether.

Examples of (b) include monomers possessing a carboxy group such as (meth)acrylic acid and maleic anhydride; monomers possessing a carboxylate group such as sodium (meth)acrylate, sodium maleate, trimethylamine salt of (meth)acrylic acid, and triethanolamine salt of (meth)acrylic acid; monomers possessing a sulfonic acid group such as vinyl sulfonic acid, vinyl toluene sulfonic acid and sulfopropyl (meth)acrylate; and monomers possessing a sulfonate group such as sodium vinyl sulfonate, methylamine salt of vinyl sulfonic acid, and diethanolamine salt of sulfopropyl(meth)acrylate.

Examples of (c) include polyols such as ethyleneglycol and trimethylolpropane; bisacrylamides such as N,N-methylene-bisacrylamide; multifunctional (meth)acrylic esters such as ethyleneglycol di(meth)acrylate, polyethyleneglycol di(meth)acrylate, and trimethylolpropane tri(meth)acrylate; methylol(meth)acrylamide; glyoxal; etc.

In the description herein, "(meth)acrylic-" means "acrylic-" or "methacrylic-".

Examples of the water absorbent resin other than those noted above, are ② those obtainable by polymerizing the components (a) and (b), e.g., hydrolyzed product of starch-acrylonitrile graft copolymer or hydrolyzed product of cellulose-acrylonitrile graft copolymer; ③ crosslinked material of (a) (e.g., crosslinked carboxymethylcellulose); ④ a copolymer of the components (b) and (c) (e.g., partially hydrolyzed product of cross linked polyacrylamide, crosslinked acrylic acid-acrylamide copolymer, crosslinked sulfonated polystyrene, saponified vinylester-unsaturated carboxylic acid copolymer disclosed in Japanese Patent Application Laid-Open No. 14689/1977 and No. 27455/1977, crosslinked polyacrylic acid or salts thereof (e.g., alkali metal salts, ammonium salts, etc.), crosslinked acrylic acid-acrylic acid ester copolymer, crosslinked isobutylenemaleic acid anhydride copolymer and crosslinked carboxylic acid denaturated polyvinyl alcohol etc.); and ⑤ the selfcrosslinking polymerization product of the component (b) (e.g., self-crosslinkable polyacrylic acid salts such as alkali metal salts, ammonium salts, etc.). These water absorbent resins (B) may be used alone or in combinations of two or more.

Among the above examples of water absorbent resins, ① and some of ④ such as the partially hydrolyzed product of crosslinked polyacrylamide, crosslinked acrylic acid-acrylamide copolymer, crosslinked polyacrylic acid salts (e.g., alkali metal salts, ammonium salts, etc.), crosslinked acrylic acid-acrylic acid ester copolymer, crosslinked isobutylene-maleic acid anhydride copolymer and crosslinked carboxylic acid denaturated polyvinyl alcohol, are preferable.

The preferable water absorbent resins (B) mentioned above are those having a water absorption capability with respect to pure water of at least 50 ml/g, preferably 100 to 1,000 ml/g. As to the form of the water absorbent resin, a powder-like one is preferable. The average particle size of the water absorbent resin is usually 840 µm or less, preferably 200 µm to 0.1 µm.

If desired, a binder (C) is added. Examples of the binder (C) are natural polymer, synthetic resin, and natural or synthetic rubber. Examples of the natural polymer are starch, carboxymethylcellulose, methylcellulose, ethylcellulose, hydroxymethyl cellulose, hydroxyethyl cellulose, sodium alginate, guar gum, xanthan gum, bean gum, carrageenin or gluten, etc. Examples of the synthetic resin are acrylic resin, polyurethane resin, unsaturated polyester resin, polyamide resin or ethylene copolymer resin, etc. Examples of the natural or synthetic rubber are natural rubber, acrylic rubber, butyl rubber, polyisobutyl rubber, styrenebutadiene rubber, ethylene-propylene rubber or chloroprene rubber. These may be used alone or in a combination of two or more. Among them, the synthetic rubber binders are most preferred.

The weight ratio of the fibrous substance (A) to the water absorbent resin (B) is variable depending on the properties of (A) and (B) or the absorbing efficiency of the treating material, but is commonly 99:1 to 50:50, preferably 95:5 to 60:40. If (B) in the above 99:1 ratio is less than 1, the water absorbing capability will be reduced.

The amount of the binder (C) which is used depending on necessity is commonly 0 % to 30 % of the total weight of (A) and (B), and is preferably 0.5 % to 15 %.

As a method of producing the treating material of the present invention, for example, there is a method ① in which the organic fibrous substance, the water absorbent resin and the binder (if desired) are mixed together, the mixture is then shaped by dry-compression molding and, if necessary, cut or broken into pellets or pieces. In another method ②, the pellets or pieces produced in method ① are coated with a water absorbent resin and if desired, with a binder powder, and then they are shaped by dry-compression molding again, and cut or broken into pieces or pellets if necessary.

More specifically, as the dry-compression forming process of a mixture of (A), (B) and, if desired, (C), for example, there is a method (1) of shaping the mixture directly into pellets under pressure in a dry condition by using a mold having a proper shape and volume, or a method (2) such as shaping the mixture into a sheet, bar, or block by dry-compression molding and then the obtained shaped articles are cut or broken into pieces having the desired size. The compression molding of the mixture is carried out commonly at room temperature; however, a higher temperature of e.g. 30 to 300 °C may be used.

The pressure of the compression-molding may be suitably selected depending on the kind of basic powder materials and the fibrous substance, particle size, length of the fibrous substance and character of these materials. Usually, a pressure of 1 to 3,000 kg/cm², preferably 10 to 2,000 kg/cm², is applied. The compression-molding may be carried out by using a roller-type compression-molding machine (e.g., a bricketting press machine, etc.), a piston-type press molding machine, a screw-type press extruder, a perforating plate extruder (e.g., a disk pelleter) and so forth. In the above-mentioned dry-compression-molding machines, the roller-type compression-molding machine and the perforating plate extruder are preferable.

According to the invention, the obtained compression molded articles may have any shape, for instance, spherical, cylindrical, plate-like, rock-like, rectangular, conical, pyramidal, rod-like and so forth. In any shape, their size is preferably 0.1 to 20 mm, and more preferably 0.5 to 10 mm.

The treating material for excretions of pet animals of the invention may contain such additives as deodorizer, perfume, sterilizer, moldproofing agent, antiseptic agent, antiblocking agent, surface active agent, silvervine for a cat or a similar material favored by pets, and volume extending filler (e.g. clay, bentonite and zeolite, etc.). Such additives may be added to the organic fibrous substance and/or water absorbent resin in advance or to the mixture before or after the dry-compression forming process. As long as drying would not be required, a small amount of water may be contained in (A), (B) or (C).

Examples of the embodiment of the present invention will now be explained in detail. It should be understood that the present invention is not limited to the following examples.

### Example 1

Pulp made of crushed newspaper in a dry method was mixed with a fine powder of starch grafted-type water absorbent resin (trade name, "SANWET IM-1000 MPS", manufactured by Sanyo Chemical Industries, Ltd.) at a weight ratio of 85:15. The resultant mixture was compressed at 2000 kg/cm² with a disk pelletizer (supplied by Fuji Powdal Co., Ltd.) at room temperature to produce treating materials for excretions of pet animals, comprising pellets of a short cylindrical shape, 3 mm wide and 6 mm long.

400 g of the pellets of the treating material were put in a 1-liter beaker and leveled. 30 cc of artificial urine was poured on the treating material vertically from about 2 cm high for 5 seconds using a 50-cc disposable injector (made by Terumo Co.). The absorption speed of the artificial urine was measured and after 5 minutes from the start of pouring the urine, lumps of the treating material, which were formed by soaking up the artificial urine, were removed from the beaker by using tweezers. The weight of the wet lumps was then measured (N.B. less weight is preferred).

### Example 2

A treating material for excretions of pet animals was produced and evaluated in a manner similar to Example 1, but where the 85:15 mixture of the newspaper crushed pulp and the starch grafted-type water absorbent resin fine powder (trade name, "SANWET IM-1000 MPS") was replaced with an 89:10:1 mixture of paper diaper production waste, the starch grafted-type water absorbent resin fine powder (trade name, "SANWET IM-100MPS"), and styrene-butadiene rubber fine powder.

### Example 3

A treating material for excretions of pet animals was produced and evaluated in a manner similar to Example 1, but where the 85:15 mixture of the newspaper crushed pulp and the starch grafted-type water absorbent resin fine powder (trade name, "SANWET IM-1000 MPS") was replaced with an 87:10:1:2 mixture of paper diaper production waste, the starch grafted type water absorbent resin fine powder, styrene-butadiene rubber fine powder and nonionic surface active agent fine powder.

### Comparative Example 1

85 parts of newspaper crushed pulp were mixed with 15 parts of starch grafted-type water absorbent resin fine powder (trade name, "SANWET IM-1000 MPS"). Then, 35 parts of water was sprayed on the resultant mixture while mixing it uniformly. The obtained mixture was loaded into an extruder provided with a number of 3 mm diameter apertures for forming thin long rods, and the rods were extruded. The rods were cut into 6 mm long sections and then dried at 80 °C for 2 hours. The performance of the obtained treating material was evaluated in the same manner as in Example 1.

### Comparative Example 2

A test similar to Comparative Example 1 was conducted in which the 85:15:35 mixture of the newspaper crushed pulp, the starch grafted-type water absorbent resin fine powder (trade name, "SANWET IM-1000 MPS") and water was replaced with a 70:10:20:30 mixture of the newspaper crushed pulp, the starch grafted-type water absorbent resin fine powder (trade name, "SANWET IM-1000 MPS"), clay and water.

The performance of the obtained treating material was evaluated. The evaluation results of the performance of treating materials of Examples 1 to 3 and Comparative Examples 1 and 2 are shown in Table 1.

**Table 1**

| No. | Organic fibrous substance | Water absorbent resin | Binder | Surface active agent | Clay | Water | Urine absorption test results | |
|---|---|---|---|---|---|---|---|---|
| | | | | | | | Absorption speed (in seconds) *1 | weight of absorbed urine portion (g)*2 |
| Example 1 | 85 | 15 | | | | | 3.5 | 40.1 |
| 2 | 89 | 10 | 1 | | | | 3.8 | 44.3 |
| 3 | 87 | 10 | 1 | 2 | | | 3.7 | 45.2 |
| Comparative Example 1 | 85 | 15 | | | | 35 | 11.7 | 79.6 |
| 2 | 70 | 10 | | | 20 | 30 | 9.5 | 68.5 |

| | | | | | | | | |
|---|---|---|---|---|---|---|---|---|
| *1. Time (in seconds) from the end of artificial urine application to the end of absorbing almost the entire amount of urine into the treating material. | | | | | | | | |
| *2. Portions which absorbed artificial urine and formed agglomerated lumps of treating material, were removed and weighed. Less weight is preferred. | | | | | | | | |

The treating material for excretions of pet animals of the present invention produces the following advantageous effects:
(1) The granulation is implemented by compression forming in a dry condition rather than in the wet condition of the prior art and thus a follow-up drying process is not required. Accordingly, resultant organic fibrous particles are not bonded to each other very firmly, thus contributing to the higher efficiency of urine absorption.
(2) Since its urine absorbing efficiency is increased, the treating material will minimize consumption, thus ensuring cost-savings.
(3) The treating material is aggregated to a mass by absorbing urine. Thus, the material is easy to dispose of and will produce a minimum of odor.

It is submitted that the treating material of the present invention is successfully applicable to the disposal of pet animal excretions.

## Claims

1. A treating material for excretions of pet animals which is obtainable by dry-compression molding of a mixture comprising organic fibrous substance (A), powder of water absorbent resin (B) and, optionally, a binder (C).

2. The treating material for excretions of pet animals according to Claim 1, wherein the dry-compression molding is one which comprises using a roller-type compression molding machine or perforating plate extruder.

3. The treating material for excretions of pet animals according to Claim 1 or 2, wherein the weight ratio between (A) and (B) is 95:5 to 60:40.

4. The treating material for excretions of pet animals according to any one of Claims 1 to 3, wherein (A) is an organic fiber material having a length of 20 mm or less.

5. The treating material for excretions of pet animals according to any one of Claims 1 to 4, wherein average particle size of (B) is 200 µm or less.

6. The treating material for excretions of pet animals according to any one of Claims 1 to 5, wherein (A) is a pulp or is waste from the production of paper diapers.

7. The treating material for excretions of pet animals according to any one of Claims 1 to 6, wherein the amount of (C) is 0.5 % to 15 % of the total weight of (A) and (B).

8. The treating material for excretions of pet animals according to any one of Claims 1 to 7, wherein (C) is a synthetic rubber binder.

9. A method of making the treating material according to any one of claims 1 to 8, wherein the mixture comprising (A), (B) and, optionally (C) is shaped using dry-compression molding at a pressure of 1 to 3,000 kg/cm².

10. Use of the treating material according to any one of claims 1 to 8 for absorbing excretions of animals.
